Europäisches Patentamt

European Patent Office

Office européen des brevets

(11) Veröffentlichungsnummer: **0 361 162**
**A2**

(12) **EUROPÄISCHE PATENTANMELDUNG**

(21) Anmeldenummer: **89116519.3**

(22) Anmeldetag: **07.09.89**

(51) Int. Cl.5 **B25J 9/14 , B25J 3/04**

(30) Priorität: **29.09.88 DE 3832968**

(43) Veröffentlichungstag der Anmeldung:
**04.04.90 Patentblatt 90/14**

(84) Benannte Vertragsstaaten:
**CH DE FR GB IT LI**

(71) Anmelder: **ROBERT BOSCH GMBH**
**Postfach 10 60 50**
**D-7000 Stuttgart 10(DE)**

(72) Erfinder: **Goedert, Heinz, Dipl.-Ing.**
**Cannstatter Strasse 8**
**D-7140 Ludwigsburg(DE)**

(54) **Kraftregeleinrichtung für die Ansteuerung eines Manipulators.**

(57) Bei einer Regeleinrichtung (10) für die Ansteuerung eines Manipulators wird mit einem Kraftaufnehmer (16) die vom Bediener am Handhebel (15) aufgebrachte Handkraft (F) erfaßt. Diese Handkraft (F) wird als Kraftistwert ($U_x$) einem Kraftregler (18) zugeführt und mit einem vorgegebenen Sollwert ($U_w$) verglichen. Abhängig vom Vorzeichen der Regelabweichung wird der Stellantrieb (11) und somit die Masse (14) in die eine oder in die andere Richtung bewegt. Die Bewegung kommt zum Stillstand, wenn die Handkraft (F) dem vorgegebenen Sollwert ($U_w$) angeglichen wird. Der Bediener arbeitet auf einem sehr viel niedrigeren Kraftniveau, das lediglich durch den Kraftsollwert ($U_w$) festgelegt und unabhängig von der angekoppelten Last (14) ist. Auf diese Weise können schwere Lasten sehr gefühlvoll und ohne körperliche Anstrengung bewegt werden.

FIG. 1

EP 0 361 162 A2

## Kraftregeleinrichtung für die Ansteuerung eines Manipulators

Stand der Technik

Die Erfindung geht aus von einer Kraftregeleinrichtung für die Ansteuerung eines Manipulators nach der Gattung des Hauptanspruchs. Manipulatoren sind manuell gesteuerte Vorrichtungen, die die Handhabung schwerer Lasten erleichtern. Als Energieversorgung kommen die Pneumatik, die Hydraulik und die Elektrik zum Einsatz. Die Stellorgane werden dabei im allgemeinen durch Zuschalten oder Abschalten der Energiezufuhr betätigt. Das Verfahren der Last im Schaltbetrieb stellt hohe Anforderungen an die Geschicklichkeit des Bedieners.

Vorteile der Erfindung

Die erfindungsgemäße Regeleinrichtung mit den kennzeichnenden Merkmalen des Hauptanspruchs hat demgegenüber den Vorteil, daß der Antrieb bis zur maximal realisierbaren Stellkraft lastunabhängig immer mit der gleichen, einmal eingestellten Handkraft arbeitet. Aufgrund des geschlossenen Kraftregelkreises ist ein sehr feinfühliges Bewegen von Lasten möglich. Der Bediener spürt nur die eingestellte, dem vorgegebenen Sollwert entsprechende, geringe Handkraft und kann auf diese Weise sehr gefühlvoll auch schwere Lasten ohne körperliche Anstrengung bewegen.

Durch die in den Unteransprüchen aufgeführten Maßnahmen sind vorteilhafte Weiterbildungen der im Hauptanspruch angegebenen Regeleinrichtung möglich.

Zeichnung

Ausführungsbeispiele der Erfindung sind in der Zeichnung dargestellt und in der nachfolgenden Beschreibung näher erläutert. Es zeigen

Figur 1 ein Prinzipschaltbild der Kraftregeleinrichtung und der Antriebseinheit,

Figur 2 ein Schaltbild zur Steuerung eines pneumatischen Antriebs mit einem doppeltwirkenden Zylinder,

Figur 3 ein Schaltbild zur Steuerung eines Antriebs mit einem einfachwirkenden Zylinder und einem elektrisch betätigbaren Druckregelventil und

Figur 4 ein Schaltbild zur Regelung eines kolbenstangenlosen Zylinders.

Beschreibung der Ausführungsbeispiele

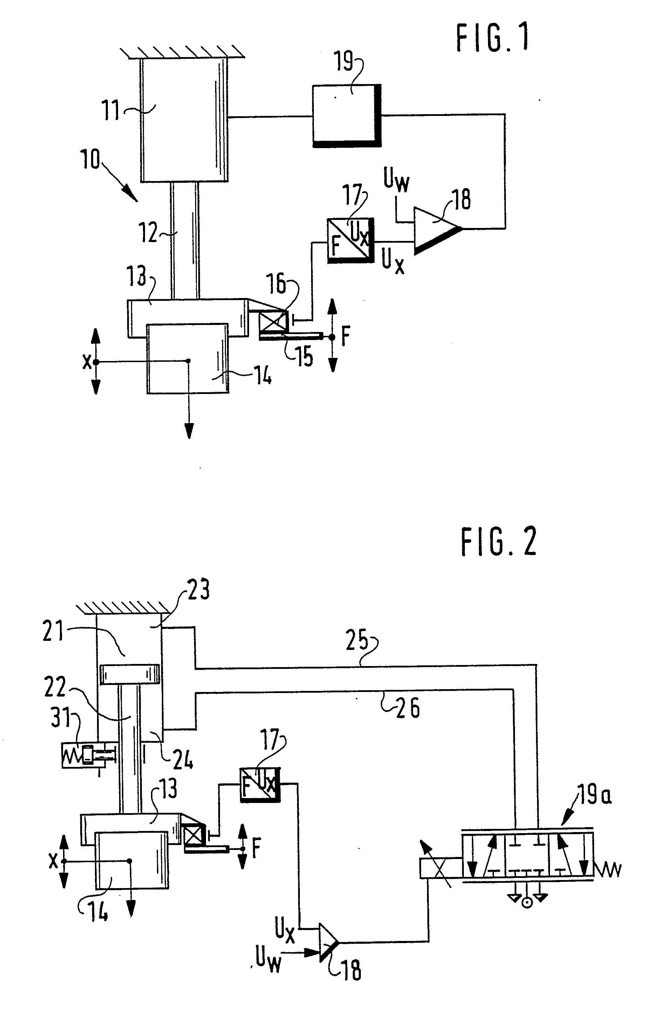

In Figur 1 ist das erfindungsgemäße Schaltungsprinzip einer Regeleinrichtung 10 für einen Stellantrieb 11 dargestellt, der einen Kolben 12 mit einem Greifer 13 aufweist. Am Greifer 13 ist eine Masse 14 eingehängt, die vom Stellantrieb 11 bewegt werden soll. Ferner greift ein Handhebel 15 am Greifer 13 an, mit dem der Bediener des Stellantriebs 11 eine Kraftkomponente in Bewegungsrichtung des Kolbens 12 einleiten kann. Am Handhebel 15 ist ein Kraftaufnehmer 16 angeordnet, der mit einem Kraftwandler 17 verbunden ist. Das Kraftsignal wird vom Kraftwandler 17 in ein Spannungssignal umgewandelt und als Kraftistwert $U_x$ einem Kraftregler 18 zugeführt, in dem der Istwert $U_x$ mit einem fest vorgegebenen Sollwert $U_w$ verglichen wird. Abhängig von der Abweichung zwischen dem Sollwert $U_w$ und dem Istwert $U_x$ wird mit Hilfe eines Stellglieds 19 der Antrieb 11 gesteuert.

Will der Bediener die Masse 14 mit Hilfe des Antriebs 11 aus einer Ausgangsposition anheben bzw. absenken, so bewegt er den Handhebel 15 in die von ihm gewünschte Richtung bzw. Position. Dabei wird vom Kraftaufnehmer 16 die eingeleitete Handkraft F als Istwert $U_x$ aufgenommen und über den Kraftwandler 17 dem Kraftregler 18 zugeführt. Weicht der vorgegebene Sollwert $U_x$ vom ermittelten Istwert $U_x$ ab, so wird über das Stellglied 19 der Antrieb 11 so lange angesteuert, bis die vom Bediener vorgegebene Handkraft F auf- bzw. abgebaut ist. Dabei wird die starr am Kolben 12 des Antriebs 11 befestigte Masse 14 mitbewegt. Eine Veränderung der zu bewegenden Masse, d.h. eine Erhöhung oder Erniedrigung, bleibt ohne Einfluß auf die Handkraft F. Selbstverständlich gilt dies nur, solange die maximal mögliche Stellkraft des Antriebs 11 nicht überschritten wird.

In den Figuren 2 bis 4 sind technische Realisierungen dieses Regelprinzips mit Hilfe eines pneumatischen Stellantriebs dargestellt. In Figur 2 besteht der Stellantrieb aus einem doppeltwirkenden Pneumatikzylinder 21, an dessen Kolbenstange 22 der Greifer 13 und die Masse 14 befestigt sind. Beide Druckräume 23, 24 sind über pneumatische Leitungen 25, 26 mit dem Stellglied, das als Proportional- bzw. Servo-Wege-Ventil 19a ausgebildet ist, verbunden. Das Ventil 19a hat eine in der Pneumatik übliche 5/3-Ausbildung und weist in der Mittelstellung eine Schließstellung auf, während es in den beiden anderen Stellungen eine Druckerhöhung bzw. Druckerniedrigung der beiden Druckräume 23, 24 ermöglicht. Ergänzend zum in Figur 1 dargestellten Prinzip ist an der Kolbenstange 22 des Zylinders 21 eine Feststelleinheit 31 angeordnet, mit der die Kolbenstange 22 in ihrer Position fixiert werden kann und somit die Masse 14 in jeder Position gehalten werden kann. Die Feststelleinheit 31 soll beim Loslassen des Handhebels 15 automatisch ansprechen und die Masse 14 in der augenblicklichen Position halten. Zudem lassen sich durch diese Einrichtung zusätzliche Sicherheitsfunktionen realisieren.

Will der Bediener die angekoppelte Masse 14 anheben, so muß er am Handhebel 15 einen Kraftistwert $U_x$ aufbringen, der etwas größer als der festeingestellte Kraftsollwert $U_w$ ist. Der Kraftregler 18 steuert das stetige Wegeventil 19a dann in der Weise an, daß die Regelabweichung minimiert wird. Dadurch werden die beiden Druckräume 23, 24 des Zylinders 21 so mit Druck beaufschlagt, daß die Kolbenstange 22 langsam in den Zylinder 21 einfährt und die Masse 14 dadurch nach oben bewegt wird. Der Bediener kann die Aufwärtsbewegung der Masse stoppen, in dem er die aufgewendete Handkraft F auf die Größe des eingestellten Kraftsollwertes $U_w$ reduziert. Dadurch wird die Regelabweichung wieder auf Null reduziert und es stellt sich ein Gleichgewichtszustand in der neuen Position ein.

Soll hingegen die Masse 14 abgesenkt werden, so muß die vom Bediener aufgewendete Handkraft F, d.h. der vom Kraftmeßaufnehmer 16 ermittelte Kraftistwert $U_x$, geringfügig kleiner als der eingestellte Kraftsollwert $U_w$ werden. Die somit resultierende Regelabweichung wird vom Kraftregler 18 wieder in ein dem Ventil 19a zugeführtes Stellsignal umgesetzt, das bewirkt, daß die Kolbenstange 22 aus dem Zylinder 21 ausfährt und somit die Masse 14 abgesenkt wird. Ein Stoppen dieser Abwärtsbewegung der Masse 14 ist in jeder beliebigen Position möglich. Es wird wieder dadurch erreicht, daß der Bediener die aufgewendete Handkraft F dem eingestellten Kraftsollwert $U_w$ angleicht. Da beim Ausführungsbeispiel nach Figur 2 das Ventil 19a über die Leitungen 25, 26 beide Druckräume 23, 24 beaufschlagt, ist in beiden Bewegungsrichtungen des Zylinders 21 eine aktive Stellbewegung für die Masse 14 möglich. Auf diese Weise lassen sich auch horizontale Manipulatorachsen realisieren. Es können ferner Fügekräfte aufgebracht werden.

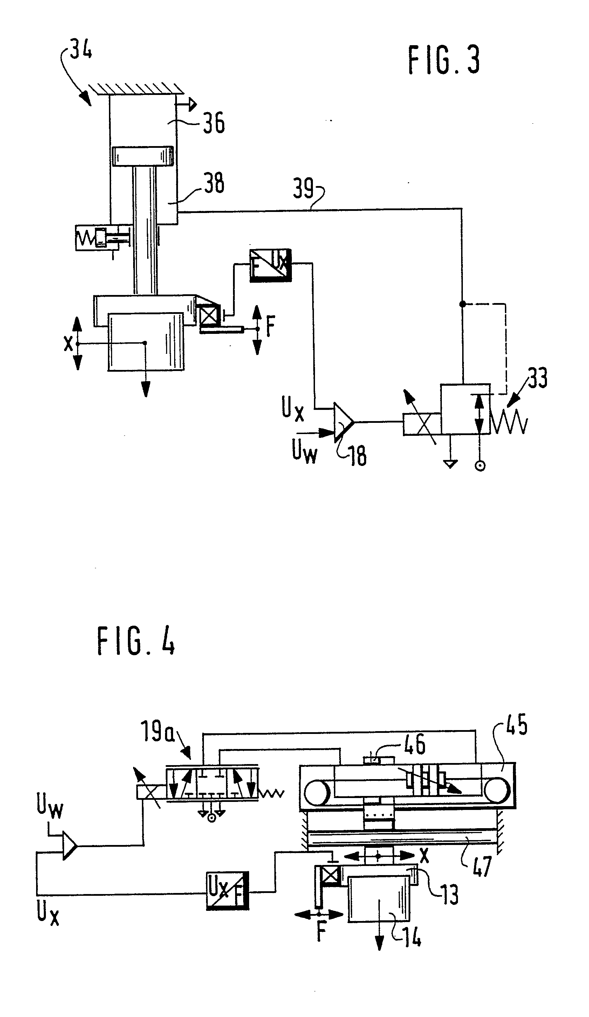

Im Ausführungsbeispiel nach Figur 3 ist der Antrieb für vertikale Bewegungsrichtungen ausgebildet. Das stetige Wegeventil 19a ist dabei durch ein elektrisch betätigtes Druckregelventil 33 ersetzt.

Ferner genügt es, für den Antrieb einen einfachwirkenden Zylinder 34 zu verwenden. Die obere Kammer 36 des Zylinders ist hierbei entlüftet, während die untere Kammer 38 des Zylinders 34 über eine Leitung 39 und das Druckregelventil 33 mit Druck beaufschlagt wird. Das Absenken der Masse 14 wird durch die Schwerkraft bewirkt. Das Verhalten des Kraftregelkreises entspricht ansonsten dem in Figur 2 dargestellten System.

Das Ausführungsbeispiel nach Figur 4 zeigt eine Anordnung in der gegenüber der Figur 2 der Kolbenstangenzylinder 21 durch einen kolbenstangenlosen Zylinder 45 ersetzt ist. Dies bringt insbesondere für horizontalen Einbau Vorteile, weil die erforderliche Einbaulänge nur unwesentlich größer als der nutzbare Hub ist. Zur Aufnahme der Gewichtskraft ist bei größeren Belastungen eine zusätzliche Führung 47 erforderlich. Die jeweils angefahrene Position wird durch eine integrierte Bremse 46 gehalten.

Die in den Figuren 2, 3 und 4 dargestellten Ausführungsbeispiele können auch in beliebiger Anzahl in mehrachsigen Manipulatoren eingesetzt werden. Für größere Kräfte bietet sich der Einsatz der Hydraulik an, wobei in Figur 2, 3 und 4 die Pneumatikkomponenten durch die entsprechenden Hydraulikkomponenten ersetzt werden müssen. Wird der Arbeitszylinder und das Ventil durch einen Elektromotor mit entsprechender Ansteuerelektronik ersetzt, so kann basierend auf dem in Figur 1 dargestellten Prinzip auch ein elektromotorischer Antrieb für einen Manipulator realisiert werden. In allen Fällen ist es aber besonders vorteilhaft, daß der Bediener auf einem sehr viel niedrigeren Kraftniveau arbeitet, das lediglich durch den Kraftsollwert $U_w$ festgelegt wird und unabhängig von der angekoppelten Last ist. Auf diese Weise kann er schwere Lasten sehr gefühlvoll und ohne körperliche Anstrengung bewegen.

## Ansprüche

1. Kraftregeleinrichtung (10) für die Ansteuerung der Energiezufuhr eines Manipulators mit einer Energiequelle, einem Meßwertaufnehmer (16), einem Kraftregler (18) und einem Stellglied (19), das mit der Energiequelle des Manipulators (11) verbunden ist, wobei der Meßwertaufnehmer (16) die auf den Handgriff (15) des Manipulators (11) einwirkende Kraft (F) bestimmt und über den Kraftregler (18) die Energiezufuhr des Manipulators gesteuert wird.

2. Kraftregeleinrichtung nach Anspruch 1, dadurch gekennzeichnet, daß der Manipulator (11) einen pneumatischen Zylinder hat, dessen Druckräume (23, 24) über das als elektrisch betätigtes, stetiges Wegeventil ausgebildete Stellglied (19a) mit der Energiequelle verbindbar sind.

3. Kraftregeleinrichtung nach Anspruch 1 und/oder 2, dadurch gekennzeichnet, daß der Manipulator (11) einen doppeltwirkenden Kolbenstangenzylinder aufweist.

4. Kraftregeleinrichtung nach Anspruch 1 und/oder 2, dadurch gekennzeichnet, daß der Manipulator einen kolbenstangenlosen Zylinder (45) aufweist.

5. Kraftregeleinrichtung nach Anspruch 1, dadurch gekennzeichnet, daß der Manipulator (11) einen doppeltwirkenden Zylinder (34) hat, dessen erster Druckraum (38) über ein als elektronisch gesteuertes Druckventil (33) ausgebildetes Stellglied mit der Energiequelle verbunden ist, während der andere Druckraum (36) entlüftet ist und daß dem Druckventil (33) das Stellsignal des Kraftreglers (18) zugeführt wird.

FIG.1

FIG.2

FIG. 3

FIG. 4

25.9.88 Ga